Europäisches Patentamt

European Patent Office

Office européen des brevets

(11) Veröffentlichungsnummer: **0 030 692**
**B2**

(19)

(12) # NEUE EUROPÄISCHE PATENTSCHRIFT

(45) Veröffentlichungstag der neuen Patentschrift:
23.09.87

(21) Anmeldenummer: 80107692.8

(22) Anmeldetag: 06.12.80

(51) Int. Cl.⁴: **C 09 D 5/44,** C 09 D 3/58,
C 08 L 63/04 //
C25D13/06

(54) Verfahren zur Herstellung kathodisch abscheidbarer Bindemittel.

(30) Priorität: 17.12.79 AT 7909/79

(43) Veröffentlichungstag der Anmeldung:
24.06.81 Patentblatt 81/25

(45) Bekanntmachung des Hinweises auf die Patenterteilung:
13.10.82 Patentblatt 82/41

(45) Bekanntmachung des Hinweises auf die Entscheidung
über den Einspruch:
23.09.87 Patentblatt 87/39

(84) Benannte Vertragsstaaten:
BE CH DE FR GB IT LI NL SE

(56) Entgegenhaltungen:
DE-A-2 701 002
DE-A-2 749 776
DE-A-2 752 255

Kittel "Lehrbuch der Lacke und Beschichtungen",
Verlag W.A. Colomb in der H. Hennemann GmbH,
Berlin-Oberschwandorf (1973), Band 1, Teil 2, Seite
627

(73) Patentinhaber: VIANOVA KUNSTHARZ
AKTIENGESELLSCHAFT, Postfach 191
Leechgasse 21, A-8011 Graz (AT)

(72) Erfinder: Pampouchidis, Georg, Dr., Obere
Teichstrasse 31, A-8010 GRAZ (AT)
Erfinder: Hönig, Helmut, Dr., Seebachergasse 10,
A-8010 Graz (AT)

(74) Vertreter: Berendt, Thomas, Dr.rer.nat. Dipl.-
Chem., Patentanwälte Dr.rer.nat. Dipl.- Chem.
Th. Berendt Dr.Ing. Hans Leyh Innere Wiener
Strasse 20/III, D-8000 München 80 (DE)

EP 0 030 692 B2

**Beschreibung**

Die vorliegende Erfindung betrifft kathodisch abscheidbare Bindemittel für Lacke, welche nach dem Elektrotauchlackierung-Verfahren abgeschieden werden können.

In der AT-B 343 769 ist ein Verfahren zur Herstellung solcher Bindemittel beschrieben, wobei 2 Mol eines Diepoxidharzes mit 1 Mol eines primär-sekundären oder sekundär-sekundären Diamins und 2 Mol einer gesättigten und/oder ungesättigten Monocarbonsäure umgesetzt werden. Zur Erzielung einer ausreichenden Vernetzung ist es in den meisten Fällen notwendig, weitere für die Vernetzung notwendige Doppelbindungen über ungesättigte Isocyanatverbindungen einzuführen. Diese Isocyanatverbindungen können unter ungünstigen Einbrannbedingungen abgespalten werden, wodurch sowohl Vernetzungsstellen verloren gehen, als auch eine Verunreinigung der Einbrennanlagen durch die Spaltprodukte erfolgt.

Überdies hat es sich gezeigt, daß die Produkte der AT-B 343 769 zur Erzielung optimaler Ergebnisse eine zu niedrige Basizität aufweisen. was durch die Notwendigkeit eines höheren Neutralisationsgrades zur Erzielung der Wasserverdünnbarkeit zu einer verstärkten Korrosionen den Elektrotauchanlagen führen kann.

Überraschenderweise wurde nun gefunden, daß es durch eine Änderung im Harzaufbau möglich ist, die erwähnten Nachteile der gemäß AT-B 343 769 erhaltenen Bindemittel zu beseitigen und zusätzlich wichtige Eigenschaften wie das elektrochemische Verhalten, die Oberflächenqualität und die korrosionsschützenden Eigenschaften wesentlich zu verbessern.

Die vorliegende Anmeldung beschreibt demgemäß ein Verfahren zur Herstellung von selbstvernetzenden kathodisch abscheidbaren Bindemitteln auf der Basis von aminmodifizierten Epoxidharzen, welches dadurch gekennzeichnet ist, daß man

A. 2 Mol einer Polyepoxidverbindung vom Novolak-Typ mit 2,5 bis 10 Epoxidgruppen pro Molekül und einem Epoxidäquivalent von 100 bis 1 000 mit,

B. 0,1 bis 2,0, vorzugsweise 0,2 bis 1,0 Mol eines aliphatischen und/oder cycloaliphatischen und/oder aromatischen Diamins, dessen Stickstoffatome entweder sekundär/sekundär oder primär/tertiär sind, und

C. 1 bis 10, vorzugsweise 2 bis 5 Mol einer $\alpha,\beta$-ungesättigten Monocarbonsäure, gegebenenfalls in Mischung mit untergeordneten Mengen von gesättigten und/oder ungesättigten Monocarbonsäuren mit 2 bis 18 C-Atomen und

D. 0,5 bis 10, vorzugsweise 1 bis 5 Mol eines Dialkanolamins und/oder eines Monoalkanolmonoalkylamins gegebenenfalls in Mischung mit Dialkylaminen umsetzt und

E. das erhaltene Produkt durch partielle oder vollständige Neutralisation mit anorganischen und/oder organischen Säuren in eine wasserverdünnbare Form überführt,

wobei die Mengenverhältnisse so gewählt werden, daß die Summe der epoxidreaktiven Wasserstoffatome der Komponenten (B) bis (D) der Anzahl der Epoxidgruppen der Komponente (A) entsprechen und das Endprodukt 0,5 bis 2,5 basische Stickstoffatome und 0,5 bis 2,5 polymerisierbare Doppelbindungen pro 1 000 Molekulargewichtseinheiten aufweist.

Die auf Basis dieser Produkte hergestellten Überzugsmittel zeigen auch bei niedriger Neutralisation eine gute Wasserverdünnbarkeit; hohe Basizität, geringere Anlagen-Korrosivität, hohes Abscheidungsäquivalent bzw. niedrigen Stromverbrauch. Sie sind bei hoher Spannung ohne Flächenstörungen abscheidbar und zeigen einen verbesserten Umgriff.

Als Komponente (A) werden Polyepoxidverbindungen vom Novolak-Typ mit 2,5 bis 10 Epoxidgruppen pro Molekül und einem Epoxidäquivalentgewicht zwischen 100 und 1 000 eingesetzt. In dieser Gruppe zählen die Polyglycidyläther der Phenol- oder Kresol-novolake oder deren Hydrierungsprodukte zu den bevorzugten Verbindungen. Diepoxidverbindungen wie die Diglycidyläther des Bisphenol A oder Glycidylester von aliphatischen, aromatischen oder cycloaliphatischen Polycarbonsäuren oder Polyolen werden vorzugsweise in Mischung mit höherfunktionellen Epoxidharzen eingesetzt.

Als Diamine, welche entweder eine primäre und eine tertiäre bzw. 2 sekundäre Aminogruppen aufweisen (Komponente B) sind beispielsweise 3-Dimethylaminopropylamin, 3-Diäthylaminopropylamin, 4-Dimethylaminobutylamin, 4-Diäthylaminobutylamin, 3-Diäthanolaminopropylamin. N,N-Dimethylisophorondiamin. N,N-Diäthylisophorondiamin. N-(2-Aminoäthyl)-morpholin, N-(3-Aminopropyl)-morpholin bzw. N,N'-Diäthylpropylendiamin, N,N'-Diäthanolpropylendiamin, N,N'-Diäthylisophorondiamin oder N,N'-Diäthanolisophorondiamin einsetzbar.

Als ungesättigte Monocarbonsäuren (Komponente C) können $\alpha,\beta$-ungesättigte Säuren vom Typ der Acryl-, Methacryl- oder Crotonsäure sowie Halbester der Maleinsäure oder Itaconsäure mit gesättigten Monoalkoholen oder Halbester anderer aliphatischer, cycloaliphatischer oder aromatischer Dicarbonsäuren mit $\alpha,\beta$-äthylenisch ungesättigten Monoalkoholen eingesetzt werden. So können beispielsweise Halbester, welche durch Umsetzung von Bernsteinsäureanhydrid, Phthalsäureanhydrid. Tetra- oder Hexahydrophthalsäureanhydrid mit Hydroxyalkylmethacrylaten oder Estern der Methacrylsäure mit Di-, Tri- oder Polyalkylenglykolen erhalten werden. mit Vorteil verwendet werden. Zusammen mit den genannten $\alpha,\beta$-äthylenisch ungesättigten Carbonsäuren können in untergeordneten Mengen auch andere ungesättigte bzw. gesättigte Monocarbonsäuren mit 2 bis 18 C-Atomen wie z. B. Essigsäure, n-Capronsäure, Isononansäure, Palmitinsäure, Rizinensäure, Ölsäure, Stearinsäure zusammen mit $\alpha,\beta$-ungesättigten Carbonsäuren verwendet werden.

Als sekundäre Amine (Komponente D) werden Dialkanolamine oder Monoalkanolmonoalkylamine, verwendet. Zu diesen Gruppen zählen beispielsweise Diäthanolamin, Dipropanolamine, Dibutanolamine sowie

2

Methylmethanolamin, Äthyläthanolamin, Propyläthanolamin, Methylpropanolamin, Äthylpropanolamin, Propylpropanolamin oder weitere Homologe dieser Verbindungsklassen. Anteilsweise können auch Dialkylamine, wie Diäthylamin, Dipropylamine oder Dibutylamine verwendet werden.

Die Art und Menge an Polyepoxidverbindung, Diamin, ungesättigter oder gesättigter Monocarbonsäure und sekundären Amin werden so gewählt, daß einerseits die Anzahl der epoxidreaktiven Wasserstoffatome aus dem Diamin, Monocarbonsäuren und sekundären Aminen praktisch gleich mit der Anzahl der Epoxidgruppen im Ansatz ist und andererseits nach der Additionsreaktion das Produkt in 1 000 Molekulargewichtseinheiten 0,5 bis 2,5 basische Stickstoffgruppierungen und 0,5 bis 2,5 polymerisierbare Doppelbindungen aufweist.

Die Durchführung des erfindungsgemäßen Verfahrens erfolgt in der Weise, daß man die Polyepoxide vorzugsweise gleichzeitig mit den Diaminen, sekundären Aminen und Monocarbonsäuren unter Mitverwendung von inerten Lösungsmitteln und Polymerisationsinhibitoren bei 50 bis 150°C umsetzt. Die bevorzugte Reaktionstemperatur liegt bei 100 bis 120°C.

Die Aminogruppen der erfindungsgemäßen Überzugsmittel werden partiell oder vollständig mit organischen und/oder anorganischen Säuren, z. B. Ameisensäure, Essigsäure, Milchsäure, Phosphorsäure u. dgl. neutralisiert und danach mit Wasser verdünnt. Der Neutralisationsgrad hängt im Einzelfall von den Eigenschaften des verwendeten Bindemittels ab. Die Bindemittelzusammensetzungen erlauben bei der richtigen Auswahl der Komponenten, bereits bei einem pH-Wert von 5 bis 8, vorzugsweise 6 bis 7, die Verdünnung mit bzw. Dispergierung in Wasser.

Die Konzentration des Bindemittels in Wasser hängt von den Verfahrensparametern bei der Verarbeitung im Elektrotauchverfahren ab und liegt im Bereich von 3 bis 30 Gew.-%, vorzugsweise bei 10 bis 20 Gew.-%. Die zur Verarbeitung gelangende Zubereitung kann gegebenenfalls auch verschiedene Zusatzstoffe, wie Pigmente, Füllstoffe, obenflächenaktive Mittel u. dgl. enthalten.

Bei der Abscheidung wird die das Erfindungsgemäße Bindemittel enthaltende wäßrige Überzugsmasse in Kontakt mit einer elektrisch leitenden Anode und einer elektrisch leitenden Kathode gebracht, wobei die Oberfläche der Kathode mit dem Überzugsmittel beschichtet wird. Man kann verschiedene elektrisch leitende Substrate beschichten, insbesondere metallische Substrate, wie Stahl, Aluminium, Kupfer und dgl. jedoch auch metallisierte oder andere mit einem leitfähigen Überzug versehene Stoffe.

Nach der Abscheidung wird der Überzug bei erhöhter Temperatur gehärtet. Zum Härten werden Temperaturen von 130 bis 200°C, vorzugsweise 150 bis 180°C angewandt. Die Härtungszeit beträgt 5 bis 30 Minuten, vorzugsweise 10 bis 25 Minuten.

Die folgenden Beispiele erläutern die Erfindung ohne sie zu beschränken. Alle Angaben in Teilen bzw. Prozenten beziehen sich auf Gewichtsteile und Gewichtsprozente.

## Beispiele 1-9

In einem mit Rührer, Tropftrichter, Thermometer und Rückflußkühler ausgestatteten Reaktionsgefäß werden zur Polyepoxidverbindung. gegebenenfalls in Gegenwart eines inerten Lösungsmittels, wie Äthylglykolacetat, die Monocarbonsäure, die sekundären Amine und Diamine zugegeben und unter Mitverwendung von Polymerisationsinhibitoren 1 bis 3 Stunden bei 100 bis 110°C solange reagiert, bis die Epoxidzahl und die Säurezahl praktisch auf 0 gesunken ist. Die Menge und Art der Komponenten sind in der Tabelle 1 zusammengefaßt.

**Tabelle 1**

|   | Polyepoxid (Mol) | Diamin (Mol) | Sek. Amin (Mol) | Monocarbonsäure (Mol) |
|---|---|---|---|---|
| 1 | 2 EPH A | 0,7 DMAPA | 1,0 DÄOHA | 2,0 HE A |
| 2 | 2 EPH B | 0,7 DÄAPA | 1,6 DÄOHA | 4,2 MACS |
| 3 | 2 EPH B | 0,8 DÄAPA | 0,9 DÄOHA 0,9 DÄA | 3,8 HE B |
| 4 | 2 EPH B | 0,7 DÄAPA | 0,9 DÄOHA 0,9 DÄA | 3,6 HE B 0,4 RFS |
| 5 | 2 EPH B | 0,7 DÄAPA | 1,8 DIPA | 3,6 MACS 0,4 RFS |
| 6 | 2 EPH C | 0,6 DÄAPA | 2,0 DIPA | 4,0 MACS 1,0 RFS |
| 7 | 2 EPH C | 0,6 DMAPA | 1,0 DÄA 1,0 DÄOHA | 4,0 HE A 1,0 RFS |
| 8 | 1 EPH C 1 EPH D | 0,8 DMAPA | 1,5 DIPA | 3,0 HE B |
| 9 | 1 EPH C 1 EPH D | 0,7 DMAPA | 1,4 DÄOHA | 3,0 HE B 0,3 RFS |

Erläuterungen der Abkürzungen in Tabelle 1

EPH A: flüssiges Epoxidnovolakharz mit einem Epoxidäquivalent von etwa 180 und eine Epoxidfunktionalität von 2,2

EPH B: hochviskoses Epoxidnovolakharz mit einem Epoxidäquivalent von etwa 180 und eine Epoxidfunktionalität von 3,6

EPH C: halbfestes Epoxidnovolakharz mit einem Epoxidäquivalent von etwa 210 und eine Epoxidfunktionalität von 4,1

EPH D: flüssiges Epoxidharz auf Basis Bisphenol A mit einem Epoxidäquivalent von etwa 180 und eine Epoxidfunktionalität von 2

DMAPA: 3-Dimethylaminopropylamin

DÄAPA: 3-Diäthylaminopropylamin

DÄOHA: Diäthanolamin

DÄA: Diäthylamin

DIPA: Diisopropanolamin

HE A: Halbester aus Maleinsäureanhydrid und Hydroxyäthylmethacrylat

HE B: Halbester aus Tetrahydrophthalsäureanhydrid und Hydroxyäthylmethacrylat

MACS: Methacrylsäure

RFS: Rizinenfettsäure

## Prüfung der Bindemittel gemäß Beispiele 1-9

Aus den oben angeführten Bindemitteln wurden jeweils Proben von 100 g Festharz mit der entsprechenden Säure versetzt und unter Rühren mit deionisiertem Wasser auf 1 000 g ergänzt. Aus diesen 10 %igen Lösungen wurden kataphoretisch Filme auf Stahlblech abgeschieden. Die Abscheidungszeit betrug in allen Fällen 60 Sekunden. Die überzogenen Substrate wurden anschließend mit deionisiertem Wasser gespült und bei erhöhter Temperatur gehärtet. Die durchschnittliche Schichtstärke der eingebrannten Filme betrug 13 bis 17 μm.

In Tabelle 2 sind die Bedingungen und Ergebnisse zusammengefaßt.

**Tabelle 2**

| | Neutralisation | | Beschichtung | | | Prüfung | | |
|---|---|---|---|---|---|---|---|---|
| | Menge[1] Art[2] | pH[3] | Volt | Härtung min/°C | Härte[4] | Tiefung[5] | Beständigkeit [6] | [7] |
| 1 | 1,8/A | 6,6 | 240 | 20/180 | 170 | 7,8 | 360 | 240 |
| 2 | 1,8/A | 6,2 | 280 | 15/170 | 190 | 7,5 | 480 | 360 |
| 3 | 2,4/E | 7,1 | 300 | 15/170 | 190 | 8,0 | 500 | 420 |
| 4 | 3,6/M | 7,0 | 300 | 20/180 | 180 | 8,5 | 450 | 380 |
| 5 | 2,4/E | 6,5 | 300 | 20/170 | 170 | 8,8 | 480 | 380 |
| 6 | 2,0/A | 6,0 | 260 | 20/170 | 170 | 8,2 | 440 | 360 |
| 7 | 2,4/E | 6,2 | 280 | 20/180 | 180 | 7,8 | 480 | 360 |
| 8 | 2,0/A | 6,0 | 280 | 20/180 | 180 | 8,0 | 450 | 350 |
| 9 | 1,8/A | 6,0 | 260 | 20/180 | 170 | 8,5 | 440 | 320 |

(1) Menge der Säure in g pro 100 g Festharz
(2) E: Essigsäure, M: Milchsäure, A: Ameisensäure
(3) gemessen in 10 %iger wäßriger Lösung
(4) Pendelhärte nach König DIN 53 157 (sec)
(5) Tiefung nach Erichsen DIN 53 156 (mm)
(6) Angabe der Stunden bis Rost- oder Blasenbildung bei Wasserlagerung/40°C sichtbar
(7) Salzsprühtest nach ASTM - B 117-64 : 2 mm Angriff am Kreuzschnitt nach der angegebenen Stundenzahl

Für diesen Test wurden gereinigte, nicht vorbehandelte Stahlbleche mit einem pigmentierten Lack beschichtet, welcher — bezogen auf 100 Gew.-Teile Harzfestkörper, 20 Gew.-Teile Aluminiumsilikatpigment und 2 Gew.-Teile Ruß enthielt.

## Patentanspruch

Verfahren zur Herstellung von selbstvernetzenden kathodisch abscheidbaren Bindemitteln auf der Basis von aminmodifizierten Epoxidharzen, dadurch gekennzeichnet, daß man

A. 2 Mol einer Polyepoxidverbindung vom Novolak-Typ mit 2,5 bis 10 Epoxidgruppen pro Molekül und einem Epoxidäquivalent von 100 bis 1 000 mit

B. 0,1 bis 2,0, vorzugsweise 0,2 bis 1,0 Mol eines aliphatischen und/oder cycloaliphatischen und/oder aromatischen Diamins, dessen Stickstoffatome entweder sekundär/sekundär oder primär/tertiär sind, und

C. 1 bis 10, vorzugsweise 2 bis 5 mol einer $\alpha,\beta$-ungesättigten Monocarbonsäure, gegebenenfalls in Mischung mit untergeordneten Mengen von gesättigten und/oder ungesättigten Monocarbonsäuren mit 2 bis 18 C-Atomen und

D. 0,5 bis 10, vorzugsweise 1 bis 5 Mol eines Dialkanolamins und/oder eines Monoalkanolmonoalkylamins gegebenenfalls in Mischung mit Dialkylaminen umsetzt und

E. das erhaltene Produkt durch partielle oder vollständige Neutralisation mit anorganischen und/oder organischen Säuren in eine wasserverdünnbare Form überführt,

wobei die Mengenverhältnisse so gewählt werden, daß die Summe der epoxidreaktiven Wasserstoffatome der Komponenten (B) bis (D) der Anzahl der Epoxidgruppen der Komponente (A) entsprechen und das Endprodukt 0,5 bis 2,5 basische Stickstoffatome und 0,5 bis 2,5 polymerisierbare Doppelbindungen pro 1 000 Molekulargewichtseinheiten aufweist.

## Claim

Process for producing self-crosslinking cathodically depositable binders on the basis of amine-modified epoxy resins, <u>characterised in that</u>

(A) 2 moles of a polyepoxy compound of the novolak-type with from 2.5 to 10 epoxy groups per molecule and an epoxy equivalent of from 100 to 1000,

(B) 0.1 to 2.0, preferably 0.2 to 1.0 moles of an aliphatic and/or cycloaliphatic and/or aromatic diamine with secondary/secondary or primary/tertiary nitrogen atoms,

(C) 1 to 10, preferably 2 to 5 moles of an $\alpha,\beta$-unsaturated monocarboxylic acid, optionally mixed with minor quantities of saturated and/or unsaturated monocarboxylic acids with from 2 to 18 C-atoms,

(D) 0.5 to 10, preferably 1 to 5 moles of a dialkanolamine and/or monoalkanolalkyl amine, optionally mixed with dialkylamines, are reacted and

(E) the obtained reaction product is rendered water soluble through partial or complete neutralisation with inorganic and/or organic acids,

the weight ratios being chosen such that the sum of the epoxy-reactive hydrogen atoms of components (B) through (D) corresponding to the number of the epoxy groups of component (A) and that the final product carries of from 0.5 to 2.5 of basic nitrogen atoms and of from 0.5 to 2.5 of polymerisable double bonds in 1000 molecular weight units.

## Revendication

1. Procédé de préparation de liants autoréticulants, déposables à la cathode, à base de résines époxydiques modifiées par des amines, caractérisé en ce que:

(A) on fait réagir 2 moles d'un composé polyépoxydique du type novolaque avec 2,5 à 10 groupes époxydes par molécule et présentant un équivalent d'époxyde de 100 à 1.000 avec

(B) 0,1 à 2,0, de préférence 0,2 à 1,0 mole d'une diamine aliphatique et/ou cycloaliphatique et/ou aromatique dont les atomes d'azote sont soit secondairs/secondaire, soit primaire/tertiaire, et

(C) 1 à 10, de préférence 2 à 5 moles d'un acide monocarbozylique alpha, bêta-insaturé, éventuellement en mélange avec des proportions mineures d'acides monocarboxyliques saturés et/ou insaturés en C 2-C 18 et

(D) 0,5 à 10, de préférence 1 à 5 moles d'une dialcanolamine et/ou d'une monoalcanolmonoalkylamine, éventuellement en mélange avec des dialkylamines, et

(E) on fait passer le produit obtenu à l'état diluable à l'eau par neutralisation partielle ou totale à l'aide d'acides minéraux et/ou organiques,

les proportions relatives étant choisies de manière que la somme des atomes d'hydrogène réactifs avec les époxydes des composants (B) à (D) corresponde au nombre des groupes époxydes du composant (A) et que le produit final contienne de 0,5 à 2,5 atomes d'azote basiques et 0,5 à 2,5 doubles liaisons polymérisables pour 1.000 unités de poids moléculaire.